# EUROPEAN PATENT APPLICATION

(11) **EP 3 301 918 A1**
(43) Date of publication of application: **04.04.2018**
(21) Application number: 16306294.6
(22) Date of filing: 03.10.2016
(51) Int. Cl.: H04N 19/117

(54) **METHOD AND APPARATUS FOR ENCODING AND DECODING MOTION INFORMATION**

(71) Applicant: Thomson Licensing, 92130 Issy-les-Moulineaux (FR)
(72) Inventor: ROBERT, Antoine, 35576 Cesson-Sévigné (FR); LELEANNEC, Fabrice, 35576 Cesson-Sévigné (FR); POIRIER, Tangi, 35576 Cesson-Sévigné (FR)
(74) Representative: Huchet, Anne

(57) **Abstract**

A Frame Rate Up-Conversion (FRUC) mode, based on frame rate up-conversion techniques, is developed in the reference software JEM (Joint Exploration Model) by the Joint Video Exploration Team (JVET). In the current JEM implementation, the motion vector candidates in the FRUC mode is refined to 1/8-pel accuracy if the internal precision is finer than 1/4-pel. However, fixing the motion precision for the FRUC mode at 1/8-pel may not have fully exploited the advantages associated with the higher internal precision. In various embodiments, we propose to adapt the motion precision in the FRUC mode to a precision higher than 1/8-pel, for example, to the internal precision. The precision for refinement may also depend on the encoding mode. For example, a block "with MVD" may refine to the MVD precision while a block "without MVD" may refine to the internal precision.

## Description

### TECHNICAL FIELD

The present embodiments generally relate to a method and an apparatus for video encoding and decoding, and more particularly, to a method and an apparatus for encoding and decoding motion information.

### BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

### SUMMARY

According to a general aspect of the present principles, a method for video decoding is presented, comprising: determining a first motion vector predictor for a first block in a picture, without explicit syntax information related to the first motion vector predictor, wherein the first motion vector predictor is at a first precision, the first precision being finer than a second precision of signaling a motion vector difference and the first precision being finer than 1/8-pel; determining a first motion vector for the first block based on the first motion vector predictor for the first block; and decoding the first block based on the determined first motion vector for the first block.

According to another general aspect of the present principles, a method for video encoding is presented, comprising: determining a first motion vector predictor at a first precision for a first block in a picture, the first precision being finer than a second precision of signaling a motion vector difference and the first precision being finer than 1/8-pel, wherein there is no explicit syntax used to signal the first motion vector predictor; determining a first motion vector for the first block based on the first motion vector predictor for the first block; and encoding the first block based on the determined first motion vector for the first block.

According to another general aspect of the present principles, a bitstream is formatted to include encoding data representative of a block of a picture, wherein a motion vector predictor for the block is at a first precision, the first precision being finer than a second precision of signaling a motion vector difference and the first precision being finer than 1/8-pel, wherein there is no explicit syntax used to signal the motion vector predictor, wherein a motion vector for the block is based on the motion vector predictor for the block, and wherein the block is encoded based on the motion vector for the block.

According to another general aspect of the present principles, an apparatus for video decoding is presented, comprising: means for determining a first motion vector predictor for a first block in a picture, without explicit syntax information related to the first motion vector predictor, wherein the first motion vector predictor is at a first precision, the first precision being finer than a second precision of signaling a motion vector difference and the first precision being finer than 1/8-pel; means for determining a first motion vector for the first block based on the first motion vector predictor for the first block; and means for decoding the first block based on the determined first motion vector for the first block.

According to another general aspect of the present principles, an apparatus for video encoding is presented, comprising: means for determining a first motion vector predictor for a first block in a picture, wherein the first motion vector predictor is at a first precision, wherein there is no explicit syntax used to signal the first motion vector predictor, the first precision being finer than a second precision of signaling a motion vector difference and the first precision being finer than 1/8-pel; means for determining a first motion vector for the first block based on the first motion vector predictor for the first block; and means for encoding the first block based on the determined first motion vector for the first block.

The first motion vector predictor may be derived at both the encoder or decoder side, for example, based on template matching or bilateral matching. Thus, no explicit signaling is needed to transmit the motion vector predictor.

A second motion vector predictor for a second block in the picture may be determined, also without explicit syntax information related to the second motion vector predictor, wherein the second motion vector predictor is determined at the second precision, and wherein an encoding mode of the second block differs from an encoding mode of the first block.

The first motion vector for the first block may be determined as the first motion vector predictor for the first block. The second motion vector for the second block may be based on the second motion vector predictor and a second motion vector difference. For example, the first block is in a merge mode, and the second block is in an AMVP mode.

The first precision may be an internal precision at a decoder or at an encoder, namely, a precision for motion compensation. In a different embodiment, the first precision may be between an internal precision and the second precision.

The first precision may be finer than half of the second precision. The determining of the first motion vector predictor at the first precision may be only performed when the internal precision is finer than half of the second precision. If the internal precision is at half of the second precision, the first motion vector predictor may be used at the second precision.

The first motion vector predictor for the first block may be determined by selecting an initial motion vector for the first block from a plurality of motion vector candidates at the second precision; and refining the initial motion vector to the first precision. The refining may include: refining the initial motion vector at the second precision to form an adjusted motion vector; and refining the adjusted motion vector for a plurality of sub-blocks corresponding to the first block. The refining may use at least one of a diamond pattern, a cross pattern, a square pattern, and a hexagonal pattern, and the refining the initial motion vector may use a different search pattern for a different precision.

The first block or a second block may correspond to a prediction block or a coding block.

The present embodiments also provide a computer readable storage medium having stored thereon instructions for encoding or decoding video data according to the methods described above. The present embodiments also provide a computer readable storage medium having stored thereon a bitstream generated according to the methods described above. The present embodiments also provide an apparatus for transmitting the bitstream generated according to the methods described above.

### BRIEF DESCRIPTION OF THE DRAWINGS

FIG. 1 illustrates a block diagram of an exemplary HEVC (High Efficiency Video Coding) video encoder.
FIG. 2A is a pictorial example depicting the positions of five spatial candidates {a₁, b₁, b₀, a₀, b₂} for a current block, and FIG. 2B is a pictorial example depicting an exemplary motion vector representation using AMVP (Advanced Motion Vector Prediction).
FIG. 3 illustrates a block diagram of an exemplary HEVC video decoder.
FIG. 4 illustrates using a template mode to derive motion information for a current block.
FIG. 5A, FIG. 5B and FIG. 5C illustrate using a bilateral mode to derive motion information for a current "merge" block.
FIG. 6 illustrates an exemplary method for implementing the FRUC (Frame Rate Up-Conversion) tool.
FIG. 7 shows a diamond pattern and a cross patter for motion search.
FIG. 8 shows a method for refining motion information at the sub-block level for a "merge" block.
FIG. 9 illustrates a 1/4-pel rounding operation.
FIG. 10 illustrates an exemplary method for refining the best FRUC candidate selected from among the list of FRUC motion vector candidates based on the internal precision, according to an embodiment of the present principles.
FIG. 11 illustrates an exemplary method for refining the best FRUC candidate selected from among the list of FRUC motion vector candidates based on the MVD precision, according to an embodiment of the present principles.
FIG. 12 illustrates a block diagram of an exemplary system in which various aspects of the exemplary embodiments of the present principles may be implemented.

### DETAILED DESCRIPTION

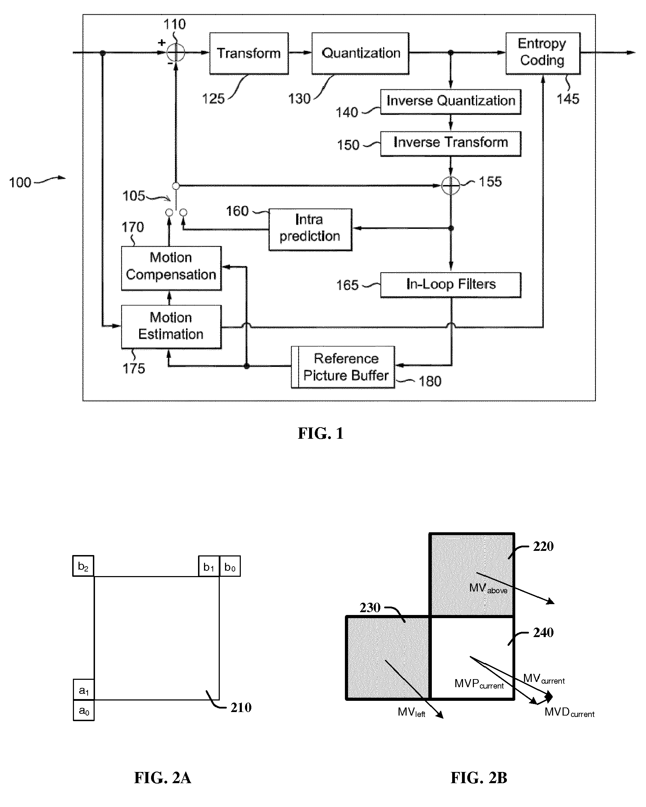

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably, and the terms "picture" and "frame" may be used interchangeably. Usually but not necessarily the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated block of all encoded color components (Y, Cb, Cr, or monochrome), syntax elements and prediction data that are associated with the block (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. The reference extends over two times the block size in horizontal and vertical direction using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

The set of possible candidates in the merge mode consists of spatial neighbor candidates, a temporal candidate, and generated candidates. FIG. 2A shows the positions of five spatial candidates {a₁, b₁, b₀, a₀, b₂} for a current block 210, wherein a₀ and a₁ are to the left of the current block, and b₁, b₀, b₂ are at the top of the current block. For each candidate position, the availability is checked according to the order of a₁, b₁, b₀, a₀, b₂, and then the redundancy in candidates is removed.

The motion vector of the collocated location in a reference picture is used for derivation of the temporal candidate. The applicable reference picture is selected on a slice basis and indicated in the slice header, and the reference index for the temporal candidate is always set to i_{ref} = 0. If the POC distance (td) between the picture of the collocated PU and the reference picture from which the collocated PU is predicted from, is the same as the distance (tb) between the current picture and the reference picture containing the collocated PU, the collocated motion vector mv_{col} can be directly used as the temporal candidate. Otherwise, a scaled motion vector, tb/td*mv_{col}, is used as the temporal candidate. Depending on where the current PU is located, the collocated PU is determined by the sample location at the bottom-right or at the center of the current PU.

The maximum number of merge candidates N is specified in the slice header. If the number of merge candidates is larger than N, only the first N - 1 spatial candidates and the temporal candidate are used. Otherwise, if the number of merge candidates is less than N, the set of candidates is filled up to the maximum number N with generated candidates as combinations of already present candidates, or null candidates. The candidates used in the merge mode may be referred to as "merge candidates" in the present application.

If a CU indicates a skip mode, the applicable index for the merge candidate is indicated only if the list of merge candidates is larger than 1, and no further information is coded for the CU. In the skip mode, the motion vector is applied without a residual update.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

Only two spatial motion candidates are chosen in AMVP. The first spatial motion candidate is chosen from left positions {a₀, a₁} and the second one from the above positions {b₀, b₁, b₂}, while keeping the searching order as indicated in the two sets. If the number of motion vector candidates is not equal to two, the temporal MV candidate can be included. If the set of candidates is still not fully filled, then zero motion vectors are used.

If the reference picture index of a spatial candidate corresponds to the reference picture index for the current PU (i.e., using the same reference picture index or both using long-term reference pictures, independently of the reference picture list), the spatial candidate motion vector is used directly. Otherwise, if both reference pictures are short-term ones, the candidate motion vector is scaled according to the distance (tb) between the current picture and the reference picture of the current PU and the distance (td) between the current picture and the reference picture of the spatial candidate. The candidates used in the AMVP mode may be referred to as "AMVP candidates" in the present application.

For ease of notation, a block tested with the "merge" mode at the encoder side or a block decoded with the "merge" mode at the decoder side is denoted as a "merge" block, and a block tested with the AMVP mode at the encoder side or a block decoded with the AMVP mode at the decoder side is denoted as an "AMVP" block.

FIG. 2B illustrates an exemplary motion vector representation using AMVP. For a current block (240) to be encoded, a motion vector (MV_{current}) can be obtained through motion estimation. Using the motion vector (MV_{left}) from a left block (230) and the motion vector (MV_{above}) from the above block (220), a motion vector predictor can be chosen from MV_{left} and MV_{above} as MVP_{current}. A motion vector difference then can be calculated as MVD_{current} = MV_{current} - MVP_{current}.

In HEVC, the precision of the motion information for motion compensation is one quarter-sample (also referred to as quarter-pel or 1/4-pel) for the luma component and one eighth-sample (also referred to as 1/8-pel) for the chroma components for 4:2:0 configuration. A 7-tap or 8-tap interpolation filter is used for interpolation of fractional-sample positions, i.e., 1/4, 1/2 and 3/4 of full sample locations in both horizontal and vertical directions can be addressed for luma.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

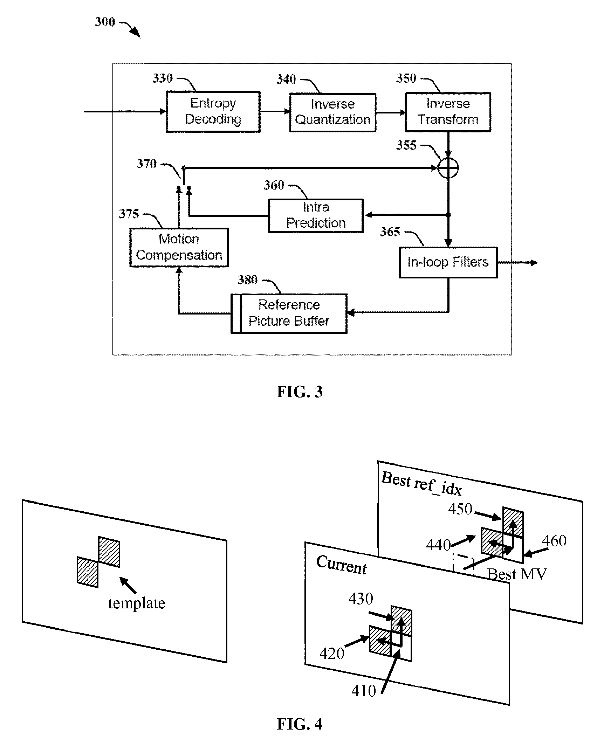

FIG. 3 illustrates a block diagram of an exemplary HEVC video decoder 300. In the exemplary decoder 300, a bitstream is decoded by the decoder elements as described below. Video decoder 300 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (330) to obtain transform coefficients, motion vectors, and other coded information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). As described above, AMVP and merge mode techniques may be used to derive motion vectors for motion compensation, which may use interpolation filters to calculate interpolated values for sub-integer samples of a reference block. In-loop filters (365) are applied to the reconstructed image. The filtered image is stored at a reference picture buffer (380).

A Frame Rate Up-Conversion (FRUC) mode, based on frame rate up-conversion techniques, is developed in the reference software JEM (Joint Exploration Model) by the Joint Video Exploration Team (JVET). With the FRUC mode, motion information of a block is derived at the decoder side without explicit syntax for MVP information. The FRUC process is completely symmetric, i.e., the same motion derivation operations are performed, at the encoder and the decoder.

Two methods, namely, bilateral matching and template matching, can be used in the FRUC mode in JEM. In particular, for a "merge" block, both bilateral matching and template matching can be used, and for an "AMVP" block, only template matching can be used. In HEVC, the "merge" block or "AMVP" block corresponds to a PB on which the same prediction is applied.

For the merge mode, the use of the FRUC-based decoder side motion vector derivation for a given block can be signaled through a dedicated flag in the bitstream. There is a SPS flag indicating if the FRUC mode can be used for a "merge" block, and a FRUC flag indicating if FRUC is locally used for the block. If FRUC is locally used, the FRUC merge mode is used, otherwise the HEVC merge mode is used. In the FRUC merge mode, the motion vector for the block is derived at the decoder without explicit syntax for motion information, and similarly to the HEVC merge mode, no MVD is used. When the FRUC merge mode is used, an additional FRUC mode flag is signaled to indicate which mode (bilateral mode for bilateral matching, or template mode for template matching) is used to derive motion information for the block.

For the AMVP mode, if the SPS flag allows the FRUC mode, then an "AMVP" block attempts to derive a motion vector as a FRUC candidate in the template mode and puts the FRUC candidate as the first one in the AMVP list of candidates. At the decoder side, a motion vector difference (MVD) is decoded and a motion vector predictor (MVP) is identified from the AMVP list, then the motion vector is decoded as MV = MVP + MVD.

FIG. 4 illustrates using the template mode to derive motion information for a current block 410. The current block may be in the "merge" or "AMVP" mode. Top and left neighboring blocks of the current block are used as a template. The motion information can be derived by locating the best match between the template (420, 430) of the current block and the template (440, 450) of a block in the reference picture by locating the block (460) with the smallest matching cost, for example, with the smallest SAD (Sum of Absolute Differences) between the templates. Other cost measures than SAD can also be used for calculating the matching cost. In particular, the motion vector can be obtained as the displacement between a collocated block of the current block and the best matching block.

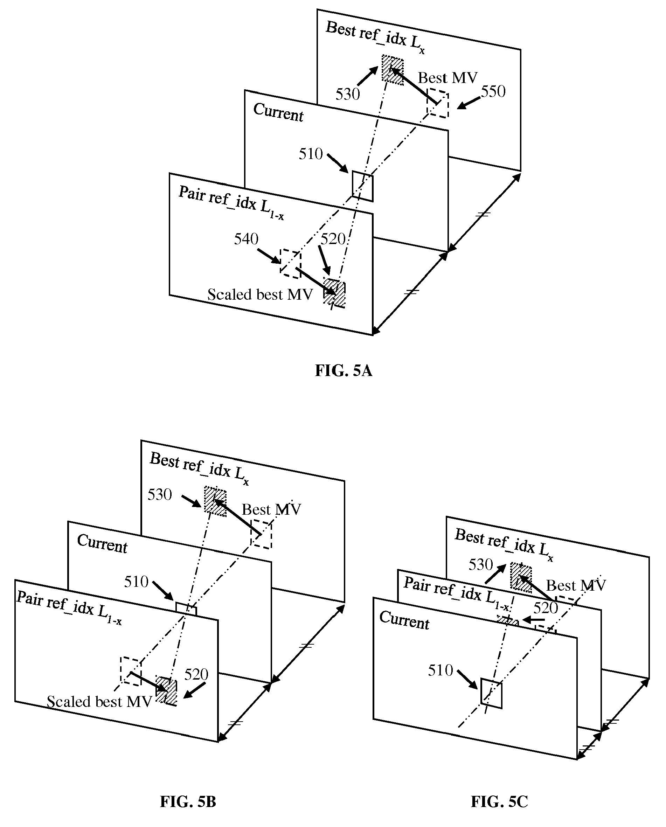

FIG. 5A illustrates using the bilateral mode to derive motion information for a current "merge" block 510. Two reference lists are used for the bilateral mode, and thus the bilateral mode is only valid for B frames. Under the assumption of continuous motion trajectory, two blocks (520, 530) along the motion trajectory of the current block (510) are used to derive motion information of the current block.

Here a pair of reference pictures are used, one from list 0 (L0) and the other one from list 1 (L1). From each pair of reference pictures, two different predictors can be constructed: (i) using the motion vector from L0 and a scaled version in L1, or (ii) using the motion vector from L1 and a scaled version in L0. For ease of notation, we denote the reference picture list as a "major" list from which the motion vector is chosen, and the other list as a "secondary" list where a scaled version is used.

When the reference pictures are symmetric with respect to the current picture as shown in FIG. 5A, the scaling factor is reduced to -1. If no symmetric pictures with respect to the current picture are available, then the closest reference picture to the current picture in the second list is selected. The reference picture "ref_idx L_{1-X}" can move closer to the current picture as shown in FIG. 5B, or even go to the other side of the current picture as shown in FIG. 5C.

The motion information can be derived by locating the pair of blocks in the two different reference pictures with the smallest matching cost, for example, with the smallest SAD between these two blocks. In particular, the motion vector can be obtained as the displacement between a collocated block (550) of the current block and the matching block (530) in the majority list. Here, the pair of blocks (520, 530) may also be considered as the templates for collocated blocks (540, 550) in the reference pictures, respectively.

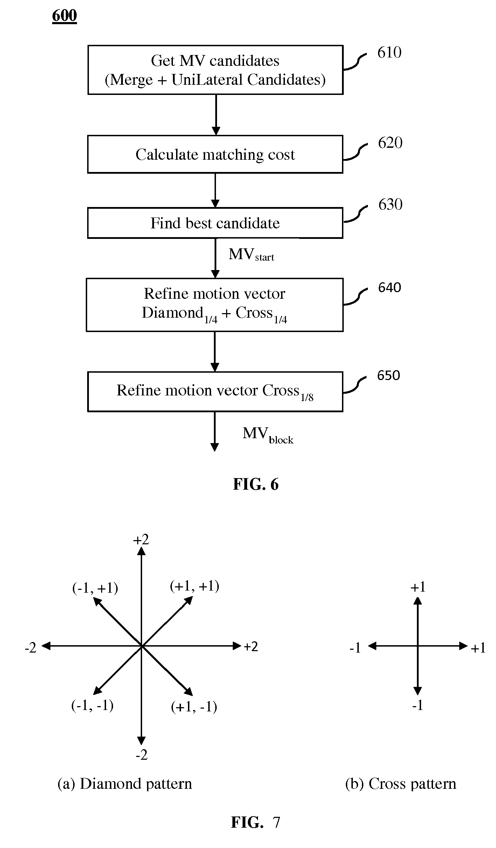

FIG. 6 illustrates an exemplary method 600 for implementing the FRUC tool. Method 600 can be used for a "merge" block or an "AMVP" block. For an inter block in the FRUC mode, a list of motion vector candidates are derived (610). A motion vector candidate for the FRUC mode may be referred to as a FRUC candidate, and the list of motion vector candidates for the FRUC mode may be referred to as a FRUC list or a list FRUC candidates. It should be noted that the list of FRUC candidates contains unique motion vectors, that is, redundant motion vectors are removed from the FRUC list and the motion vectors in the FRUC list are different from each other. During the motion derivation process, the list of FRUC candidates is checked (620) through a matching cost that depends on the mode used (template mode or bilateral mode), and the first candidate that leads to the minimum matching cost is selected (630) as the starting point (MVₛₜₐᵣₜ) for refinement.

Since the bilateral mode uses both lists with one major list and another list derived from the major list with a scaled version of the motion vector, obtaining the best candidate with the minimum cost also defines the best list to be used (i.e., the major one). Subsequently, further operations are performed, for the best identified list in the bilateral mode.

In the template mode, the reference picture is selected at the encoder and indicated in the bitstream. For example, one best candidate is obtained for each reference picture list (list 0 for a P picture, list 0 and list 1 for B pictures). Subsequently, further operations are performed for the best reference picture list if there is only 1 list, or one list after another (list 0 followed by list 1) if there are 2 lists. At the decode side, the reference picture information is decoded from the bitstream.

Then a local search based on the same matching cost function (template mode or bilateral mode) around the starting point (MVₛₜₐᵣₜ) is performed and the MV resulting in the minimum matching cost is chosen as the MV (MV_{block}) for the block.

### FRUC Merge Mode

For a "merge" block using the FRUC mode, the list of motion vector candidates includes unique motion vectors from:
- The spatial, temporal, and/or zero motion vectors as discussed above for the merge mode in HEVC;
- Unilateral motion vectors. For a block, in each possible reference picture from L0 (and L1), we may choose the collocated motion vectors and scale each of them with a ratio of the distances (tb) between current picture and the reference picture of the current block (namely, the picture with the collocated motion vector), to the distance (td) between the collocated picture and the reference picture of the collocated block, similar to the derivation process of a temporal motion vector candidate. The scaled motion vectors are called unilateral motion vectors. The scaling may be skipped if the ratio of tb to td is 1. The collocated block may be determined CTU by CTU. For the current block (merge or AMVP), collocated blocks may be determined by sample locations at (0, 0), (0, H/2), (W/2, 0) and (W/2, H/2) with respect to the current block, where H is the height of the current block, and W is the width of current block. For sub-blocks, the collocated sub-blocks are determined by the sample location at (0, 0) with respect to the current sub-block.

The refinement of the motion information using the best candidate (MVₛₜₐᵣₜ) for the block as the starting point is performed in several steps. One step attempts to adjust (640) the motion vector at the current accuracy, i.e., search with a diamond pattern as shown in FIG. 7(a), at ¼-pel precision. Each vector in FIG. 7(a) represents a small delta value (i.e., refinement vector), at a certain precision, to be added to the motion vector in order to refine the motion vector.

The refinement vector is added (640) to the candidate and the new cost is calculated as the sum of the motion vector cost (a multiple M of the sum of absolute differences in x and y between the initial best candidate (MVₛₜₐᵣₜ) and the current tested motion vector, where M is a pre-defined factor used in FRUC, for example, M = 4) and the associated matching cost. The motion vector cost as used here is to maintain that the final refined motion vector is close to that of the not yet refined selected motion vector with the minimum matching cost.

If one of the tested new motion vector has a cost lower than the current best cost, the new motion vector is defined as the new best candidate, and the associated new cost is stored as the new best cost. After all points in the diamond pattern are tested, the best candidate, if changed, is used as a new starting point, and will go through the adjustment recursively using the diamond pattern until no new best candidate can be found (i.e., no new lower cost).

Then one single step is performed (640) at 1/4-pel accuracy, using the cross pattern as shown in FIG. 7(b). Finally, a last single step (650) using also the cross pattern is done at 1/8-pel accuracy if the internal precision is finer than 1/4-pel. Here the internal precision is the precision of motion compensation which is able to interpolate fractional-sample positions up to 1/16, 1/32, or even higher.

As an example, we assume that the initial best candidate (MVₛₜₐᵣₜ) selected at step 630 is (-3.3750, 1.0000) with a matching cost of 283. The first refinement uses the diamond pattern refinement at 1/4-pel accuracy recursively, until no new candidate with a lower cost could be found:
∘ -2 in x, i.e. (-3.8750, 1.0000) with a cost of 275 (with a MV cost = 0.5000*M),
∘ -2 in x, i.e. (-4.3750, 1.0000) with a cost of 270 (with a MV cost = 1.0000*M),
∘ -2 in x, i.e. (-4.8750, 1.0000) with a cost of 255 (with a MV cost = 1.5000*M),
∘ (-1, +1), i.e. (-5.1250, 1.2500) with a cost of 253 (with a MV cost = 2.0000*M).

Then a single step is done at 1/4-pel accuracy, using the cross pattern:
∘ +1 in y, i.e. (-5.1250, 1.5000) with a cost of 250 (with a MV cost = 2.2500*M).

For an internal precision finer than 1/4-pel, a last single step using the cross pattern is achieved at 1/8-pel accuracy as:
∘ +1 in y, i.e. (-5.1250, 1.6250) with a cost of 244 (with a MV cost = 2.3750*M).

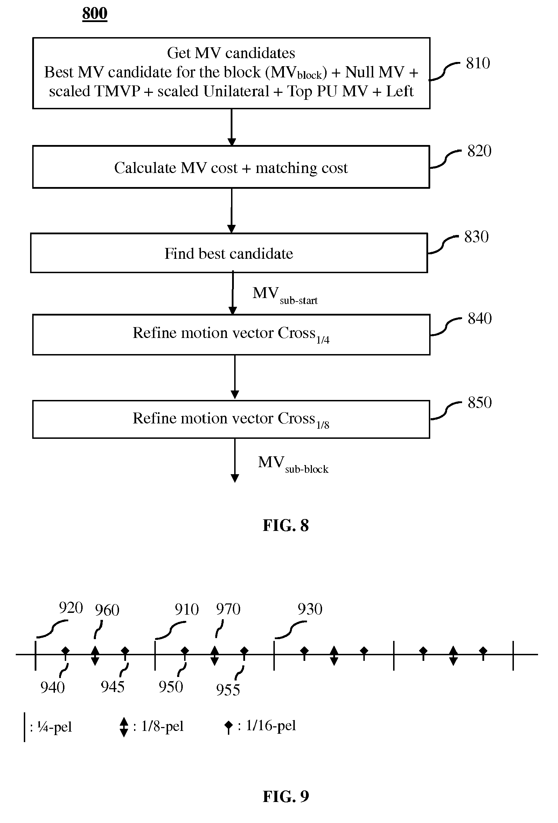

For a "merge" block, the motion information is further refined at the sub-block level with the derived motion vector (MV_{block}) for the block as the starting point as shown in FIG. 8 as method 800. The refinement at the sub-block level is performed for the reference picture where the refined motion vector (MV_{block}) is selected from.

Particularly, in the bilateral mode, the sub-block level refinement is performed with respect to the selected reference picture in the selected list. In the template mode, the sub-block level refinement is performed with respect to the selected reference picture if there is one reference picture list, and if two reference picture lists are available, the sub-block level refinement is performed with respect to the selected reference pictures in both lists. Thus, in both the bilateral and template modes, all sub-blocks use the same reference list and same reference picture index as the list (list_{block}) and reference picture index (ref_{block}) obtained for the entire block. Note that in order to distinguish the term "block" from its associated sub-blocks, we also refer to the "block" as the "entire block."

To perform the sub-block refinement, a block is divided into smaller blocks (i.e., sub-blocks) having a size of at least 4x4 pixels. For each of the sub-blocks, a new similar process as for the initial block (i.e., the entire block) is performed.

The main differences between sub-block refinement (800) and the initial block processing (600) stand in the list of FRUC candidates. For the sub-block level refinement, the FRUC list (810) contains unique motion vectors from:
i. the best candidate of the initial block (MV_{block})
ii. a null motion vector
iii. scaled TMVP (temporal MVP) as the scaled versions of the collocated motion vector, and the scaled version of the motion vector at the bottom-right of the collocated sub-block
iv. scaled version of the "unilateral" candidate based on the sub-block. It should be noted that unilateral motion vectors are already scaled by the ratio of the distance between the current picture and the collocated picture to the distance between the collocated picture and the reference picture of the collocated picture. Here for sub-blocks, reference picture is fixed to the one of the entire block (MV_{block}), and unilateral motion vectors are scaled a second time by a ratio of the distance (tb) between the current picture and the reference picture to the distance (td) between the current picture and the collocated picture. The second scaling allows getting a global scaling based on the ratio of tb to td because the current reference picture is not the same as the collocated picture.
v. top and left neighboring motion vectors (b₁ and a₁) if using the same reference picture as the current sub-block (or as the initial block since all sub-blocks use the reference picture selected for the initial block).

The matching cost for each of these candidates is computed and added (820) to the motion vector costs (a multiple M of the sum of absolute differences in x and y between the initial best candidate (MV_{block}) and the current tested candidate), in order to obtain (830) the first candidate encountered with the minimum cost as the best candidate to be refined.

Finally, the best candidate (MV_{sub,start}) for a sub-block is refined in a similar way as for the entire block. The refinement is performed using (840) the cross pattern recursively at 1/4-pel accuracy until no new best cost (as the sum of the motion vector cost and the matching cost) could be found, followed by a single step (850) using the cross pattern at 1/8-pel accuracy if the internal precision is finer than 1/4-pel. The output of method 800 is the motion vector (MV_{sub-block}) for a sub-block in the FRUC merge mode. Method 800 is performed at both the encoder and decoder side. Motion vector MV_{sub-block} is used as the motion vector for encoding or decoding the sub-block in the FRUC merge mode, without the need to encode or decode explicit syntax for motion information.

### FRUC AMVP Mode

The FRUC mode for an AMVP block proceeds in a similar manner as for a "merge" block, without the refinement at the sub-block level. The FRUC candidates are also based on the spatial, temporal, and/or zero motion vectors as discussed above for the merge mode in HEVC, and unilateral motion vectors. However, the processes are somewhat different between a merge block and an AMVP block for FRUC.

In the HEVC merge mode, at both the encoder and decoder sides, only one list of FRUC candidates is constructed with vectors, using any reference picture from any reference picture list, then the selected FRUC candidate defines also the list and the reference picture (reference picture information is not transmitted in the bitstream).

In the HEVC AMVP mode, a reference picture (and a reference picture list if in a B picture) is selected at the encoder side, for example, by testing each available reference picture and each reference list. In one example, for a B picture, when there are 5 reference pictures in L0 and 2 reference pictures in L1, 7 FRUC lists are constructed, and 7 best vectors are obtained, then the best among the 7 best vectors is selected. The reference picture information is indicated to the decoder in the bitstream for the AMVP mode. At the decoder side, one list of FRUC candidates is constructed for the selected reference picture.

When the FRUC tool is implemented in the AMVP block, a FRUC candidate can be added and inserted as the first candidate. An initial FRUC list is the same as for merge blocks (merge + unilateral) but only motion vector candidates corresponding to the selected reference picture are kept. The first one (MVₛₜₐᵣₜ) in the initial FRUC list with the minimum cost defines the best candidate for refinement. After refinement, the FRUC candidate (MV_{block}) is added to the AMVP candidate list.

Particularly, the best candidate (MVₛₜₐᵣₜ) is refined (640) recursively at 1/4-pel accuracy with the diamond pattern. Then a single refinement step (640) at 1/4-pel accuracy with the cross pattern is performed, which is followed by a final single step (650) at 1/8-pel accuracy with the cross pattern if the internal precision is finer than 1/4-pel. The output (MV_{block}) from the refinement is used as the first candidate in the AMVP list. If the first candidate (i.e., the FRUC candidate) is chosen for a block, at the encoder side, an associated MVD and reference picture index are encoded. At the decoder side, the FRUC candidate (MV_{block}) is derived symmetrical to the encoder, and the motion vector for decoding the block is obtained based on the associated MVD and the decoded reference picture index.

### Precision Management

As described above for the FRUC mode in JEM, the motion vector candidates are refined recursively at 1/4-pel accuracy, and the precision is increased with a single step of refinement at 1/8-pel accuracy if the internal precision is finer than 1/4-pel. In JEM 3.0, the internal precision of 1/4-pel for a decoder as specified in HEVC has been increased to 1/16-pel and may further be increased as the development continues. Thus, fixing the motion precision (i.e., the precision of the motion vector or the motion vector predictor derived at the decoder without explicit syntax) for the FRUC mode at 1/8-pel may not have fully exploited the advantages associated with the higher internal precision.

In one embodiment, we propose to adapt the motion precision in the FRUC mode to the internal precision. For example, the motion precision for the FRUC mode may be set at 1/8-pel if the internal precision is 1/8-pel; and when the internal precision is 1/16-pel, we may increase the motion precision for the FRUC mode also to 1/16-pel. More generally, the motion precision in the FRUC mode may adapt to the finest internal precision. It should be noted that the precision of the decoder should be the same as that of the encoder.

Increasing the motion precision may require additional refinement steps, and thus may introduce additional computational complexity. However, for a merge block, if the best candidate (MV_{block}) of an entire block is finer, then the complexity of refinement for sub-blocks may decrease when the best candidate (MV_{block}) is closer to the motion vector (MV_{sub-block}) of a sub-block.

Furthermore, for AMVP whose precision (for MVPs and MVD) is 1/4-pel, having the precision at the 1/8-pel accuracy for the FRUC may not change the results much after the motion vector predictor is rounded to 1/4-pel (the boundary between rounded value is at 1/8-pel) in order to match the MVD precision. But adding more precision (to 1/16 or more) may improve the rounding operation.

As shown in FIG. 9, adjusting by +1/8-pel or -1/8-pel may move the 1/4-pel value (910, 920, 930) to 1/8-pel positions (960, 970), which are exactly between two ¼-pel positions and the rounding decision may be difficult. However by adding more precision (1/16 or more), it may ease the rounding decision. For example, adjusting by 1/16-pel precision may move the ¼-pel position 910 to 1/16-pel position 940, 945, 950 or 955, at which the rounding decision is easy. More generally, refining the precision by half may not help that much, while refining by 1/2ⁿ, n > 1 may improve the rounding operation. Consequently, if the internal precision is half of the MVD precision, we may choose not to refine the precision of the FRUC candidate.

For the FRUC tool as described above, the process for an entire "merge" block, and for an entire "AMVP" block includes: (i) recursive steps of refinement at 1/4-pel accuracy using the diamond pattern with one refinement with a cross pattern, and (ii) a single step at 1/8-pel accuracy with a cross pattern, and the process for sub-blocks of an "merge" block includes (i) recursive steps at 1/4-pel and 1/8-pel using the cross pattern. When the internal precision is finer than 1/8-pel accuracy, the refinement of motion vector predictors to 1/8-pel accuracy may be sub-optimal. To adapt the motion precision to the internal precision, we may add some additional steps to fit the motion precision of the FRUC mode to the internal precision.

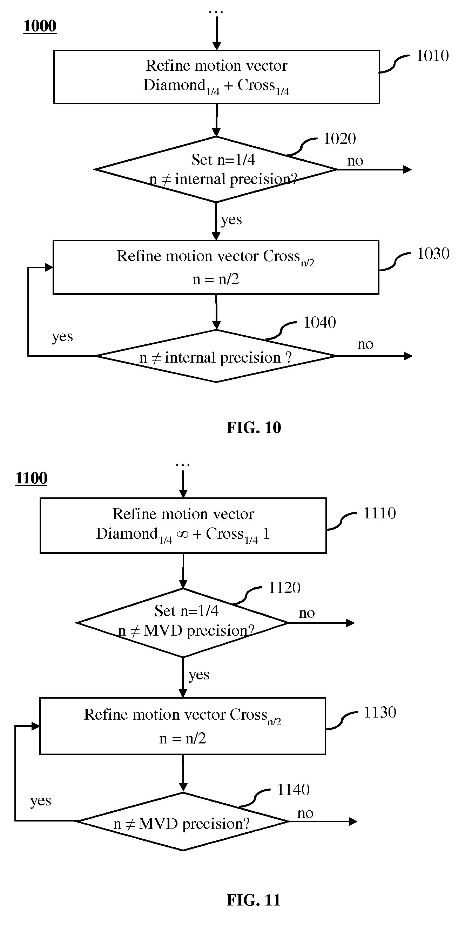

FIG. 10 illustrates an exemplary method 1000 for refining the best FRUC candidate (MVₛₜₐᵣₜ) selected from among the list of FRUC candidates based on the internal precision, according to an embodiment of the present principles. Method 1000 can be used for AMVP entire block and merge sub-block. At step 1010, the best candidate (MVₛₜₐᵣₜ) is refined using a diamond pattern recursively, followed by the refinement using a cross pattern, recursively or in a single iteration. Step 1010 is the same as or similar to step 640. At step 1020, n is set to 1/4 (i.e., the MVD precision) initially. If n is not equal to the internal precision yet, the motion vector can be refined (1030) using a cross pattern at n/2-pel accuracy, and n is halved. At step 1040, if n is not at the internal precision yet, the control returns to step 1030. If n is already at the internal precision, the refinement process ends. Here, if the internal precision is 1/8-pel, the refinement step 1030 is the same as or similar to step 650. If the internal precision is finer than 1/8-pel, additional refinement steps are introduced. Steps 1020-1040 of method 1000 may be used to replace step 650 in method 600, or to replace step 850 in method 800.

Referring back to the example used for method 600, if the internal precision is 1/32-pel, then after the last step at 1/8-pel accuracy giving:
∘ +1 in y, i.e. (-5.1250, 1.6250) with a cost of 244 (with a MV cost = 2.3750*M)

With method 1000, additional refinement steps are performed:
∘ +1 in y at 1/16-pel accuracy, i.e. (-5.1250, 1.6875) with a cost of 240 (with a MV cost = 2.4375*M)
∘ -1 in y at 1/32-pel accuracy, i.e. (-5.1250, 1.65625) with a cost of 238 (with a MV cost = 2.40625*M)

To test the proposed methods, we applied the adaptive motion precision to the FRUC tool in JEM 2.0, under typical test conditions. As shown in TABLE 1, there is around 0.05% BD (Bjøntegaard-Delta) rate reduction with almost no increase in the encoding and decoding running time. Thus, the present embodiment may improve the compression efficiency while maintaining the computational complexity cost.

**TABLE 1**

| | **Random Access Main 10** | | | | |
|---|---|---|---|---|---|
| | **Over HM-16.6-JEM-2 (parallel)** | | | | |
| | Y | U | V | EncT | DecT |
| Class A1 | 0.01% | 0.09% | -0.06% | 102% | 106% |
| Class A2 | -0.07% | -0.02% | -0.01% | 101% | 90% |
| Class B | -0.05% | -0.02% | 0.10% | 100% | 98% |
| Class C | -0.03% | -0.06% | -0.05% | 100% | 110% |
| Class D | -0.07% | -0.40% | -0.21% | 100% | 106% |
| Class E | | | | | |
| **Overall (Ref)** | -0.04% | -0.08% | -0.04% | 101% | 102% |
| Class F (optional) | -0.01% | -0.05% | 0.02% | 100% | 81% |

In the above, for "AMVP" blocks which use MVD, the FRUC candidates are derived at the internal precision of an encoder or decoder, and are then rounded to fit the transmitted MVD precision. In one embodiment, we may directly limit the precision of the FRUC candidates to the precision of MVD during the derivation processes.

In the FRUC tool presented earlier, the refinement of FRUC candidates is achieved in the same precision for "AMVP" blocks, and "merge" blocks and sub-blocks. In one embodiment, we may adapt the refinement to the encoding/decoding mode of a block (or sub-block). In particular, we may differentiate the processes for "AMVP" blocks and "merge" blocks (or sub-blocks). In one example, for "merge" blocks, the refinement processes may remain as what is described in method 600, 800, and 1000, where the motion precision is guided by the internal precision of the encoder or decoder, and for "AMVP" blocks, the motion precision may follow the MVD precision instead of the internal one.

FIG. 11 illustrates an exemplary method 1100 for refining the best FRUC candidate (MVₛₜₐᵣₜ) selected from among the list of FRUC candidates based on the MVD precision, according to an embodiment of the present principles. Steps 1110-1140 in method 1100 proceed similarly to steps 1010-1040 in method 1000, except that the adaptations in method 1100 is based on the MVD precision while method 1000 is based on the internal precision. It is also possible to refine the FRUC motion precision to somewhere between the internal precision and the MVD precision, for example, to a precision finer than half of the MVD precision.

In method 1000 or 1100, the refinement steps use different search patterns depending on the precision, i.e., several diamond patterns followed by one or more cross patterns at 1/4-pel accuracy, and only a single cross pattern for the finer precisions. However, other search patterns, for example, but not limited to, square and hexagonal patterns can be used, and any combination of search patterns can be used.

For example, in order to test more positions, the refinement steps at 1/4-pel accuracy can stay the same as described in method 1000 or 1100, but refinements at finer accuracies can use the square pattern instead of the cross one. The square pattern includes the cross (+1 or -1 in x or y (see FIG. 7(b)), but also a diagonal part as in the diamond pattern (+1 or -1 in x and y (see FIG. 7(a)). The diagonal part of the square pattern allows testing positions not reachable with a single pass of the cross pattern.

In another example, the first refinement steps at 1/4-pel accuracy can also be modified. For sub-blocks of "merge" blocks, we may replace the cross pattern used for the multiple refinement steps by the square pattern where one diagonal step replaces two steps of the cross pattern. For "merge" and "AMVP" blocks, the diamond pattern could be used for all refinement steps regardless of the accuracy and the single step with the cross pattern moved as a second last step at the finer precision. Referring back to FIG. 6, FIG. 10 and FIG. 11 as examples, in method 600, step 640 may use only a diamond pattern and step 650 may use a diamond pattern and a cross pattern at 1/8-pel. In method 1000, steps 1010 and 1030 may use only a diamond pattern and an additional step may be added at the end with a cross pattern at the finest precision. Similarly, method 1100 can also be adjusted.

Any combination of patterns could be used for all accuracies, for example, at 1/4-pel accuracy, we may use diamond + cross, cross, square, diamond, hexagonal, or hexagonal + square pattern, then at 1/8, 1/16, 1/32-pel or finer precision, we may use cross, square, diamond, or diamond + cross pattern.

### Improvements on Motion Vector Candidates

As discussed above, an initial list of FRUC candidates is used for obtaining a starting point for refinement, as those shown in 610 of FIG. 6 for an entire block and those in 810 of FIG. 8 for a sub-block. In order to improve the compression performance, the lists of FRUC candidates, for example, as those used in 610 or 810, may be adjusted.

In the current FRUC tool in JEM software, for an "AMVP" entire block, the motion vector predictor candidates as in the HEVC "merge" modes and unilateral motion vectors are used. However, the AMVP motion vector predictors as specified in HEVC are not considered for FRUC, even these candidates are different and may be better for AMVP blocks than the merge candidates (with AMVP, MVD may be smaller than by using merge MVP which may not be adapted to MVD calculation). In one embodiment, we propose to add the AMVP candidates for an AMVP entire block when the FRUC tool is used to improve the compression performance of the AMVP block.

For a "merge" block, the sub-blocks can be further refined. The sub-blocks of "merge" blocks can already use top or left spatial neighbor motion vectors if the top or left motion vectors use the same reference picture as the current block. These candidates are quite often selected for sub-blocks and are not always considered for entire blocks in the JEM FRUC tool. It is thus interesting to add these two spatial neighbor candidates to the FRUC list for entire blocks when these two spatial neighbor candidates use the same reference picture as the current block. It should be noted that these neighbors are only added in the case they are not already present in the HEVC merge candidates, which can include these spatial neighbor candidates under some more restrictive rules.

Similarly, merge candidates can use other spatial neighbors such as the top-left, top-right and bottom-left ones. Thus it can be interesting to add them, for both entire block and sub-blocks, also in the FRUC list when the same reference picture is used as the current block (if not already present).

For example, the list of FRUC candidates for an entire block can contain unique motion vectors from:
∘ *Only for "AMVP" blocks, "AMVP" motion vector candidates as in HEVC,*
∘ The merge candidates as in HEVC,
∘ "Unilateral" motion vectors,
∘ *Top and left neighboring motion vectors if using the same reference frame (e.g., b₁ and a₁),* and
∘ *Top-left, top-riglrt, bottom*-*left neighboring motion vectors if using the same reference frame*.
Note that the candidates in addition to those in the JEM 3.0 FRUC tool are described in italics and the list of candidates is checked in the order as described.

The list of FRUC candidates for a sub-block can contain unique motion vectors from:
o The best refined FRUC candidate (MV_{block}) of the whole block,
∘ A null motion vector candidate,
∘ Scaled motion vectors of the collocated and bottom-right collocated blocks associated with the sub-block,
∘ Scaled "unilateral" motion vectors,
∘ Top and left neighboring motion vectors if using the same reference frame,
∘ *Top-left, top-right, bottom-left neighboring motion vectors if using the same reference frame*.

Here, we expand the list of FRUC candidates to check for both an entire block and a sub-block. Regarding the complexity, adding several new FRUC candidates may increase the number of matching cost calculations. However, if newly introduced candidates have lower matching costs, then the number of steps for refinement may decrease. Since the most computationally complex part of the FRUC tool is in the refinement stage, the integration of new candidates may keep the overall complexity, or even reduce the complexity if the new candidates are selected more often as the best one.

In the above example, the AMVP candidates as specified in HEVC are used for "AMVP" entire blocks, as the first ones in the FRUC list. Because the first minimum is chosen, placing AMVP candidate at the beginning of the list enables AMVP candidates to be chosen with a higher priority than other candidates in the FRUC list. Furthermore, since the AMVP candidates may be better predictors than the merge ones, the AMVP candidates may be selected more often and the associated subsequent refinement steps may be more limited, i.e., shorter than those for a merge candidate. Thus, adding the AMVP candidates may be able to reduce the complexity while also improving the compression efficiency.

According to the above example, for entire blocks, five spatial neighbors can be added at the end if not already present in the FRUC list (composed of unique motion vectors). The ending position of these five spatial neighbors and the possible redundancy with the merge candidates limit the number of candidates chosen from among these five spatial neighbors, and how often these new neighbors are used, and thus limit the impact of these additional spatial neighbors on the complexity. Also since spatial neighbors can be in the merge candidates, the number of refinement steps for new spatial candidates is similar to the number of steps for merge candidates, and the new spatial candidates may neither increase nor decrease the complexity.

For sub-blocks, only three new spatial neighbor candidates are added at the end of the FRUC list if not already present. The ending position of these new candidates will limit the actual use of these candidates, and refinement will use quite the same number of steps as for candidates already present before. Thus the complexity increase will be limited to some matching cost calculations. In addition, since entire blocks have been improved with new candidates, the starting point for sub-block refinement is often improved, therefore may reduce the number of steps for refinement. Overall the impact of the additional candidates for sub-blocks on complexity should be negligible if the enhancement from the first candidate for the entire block (MV_{block}) compensates the additional matching cost calculations.

To test the proposed methods, we applied the additional FRUC candidates to the FRUC tool in JEM 3.0, under typical test conditions. As shown in TABLE 2, there is around 0.20% BD rate reduction with almost no increase in the encoding time, and about 6% reduction in decoding running time. Thus, the present embodiment may improve the compression efficiency while reducing the computational complexity cost.

**TABLE 2**

| | **Random Access Main 10** | | | | |
|---|---|---|---|---|---|
| | **Over HM-16.6-JEM-3 (parallel)** | | | | |
| | Y | U | V | EncT | DecT |
| Class A1 | -0.25% | -0.41% | -0.34% | 99% | 94% |
| Class A2 | -0.15% | -0.19% | -0.30% | 101% | 93% |
| Class B | -0.22% | -0.17% | -0.27% | 101% | 94% |
| Class C | -0.20% | -0.08% | -0.15% | 102% | 95% |
| Class D | -0.16% | -0.19% | 0.31% | 103% | 90% |
| Class E | | | | | |
| **Overall (Ref)** | -0.20% | -0.21% | -0.16% | 101% | 94% |
| Class F (optional) | -0.16% | -0.31% | -0.24% | 100% | 92% |

In other embodiments, the FRUC candidates for the entire block or the sub-block can be adjusted differently. In one example, only a subset of the additional candidates may be included into the FRUC list. In one embodiment, the FRUC list of candidates for an entire block can contain unique motion vectors from:
∘ The merge candidates as in HEVC,
∘ "Unilateral" motion vectors,
∘ *Top and left neighboring motion vectors if using the same reference frame (e.g., b₁ and a₁),* and

In another example, it is possible to add other neighbors in the FRUC lists in addition to the top-left, top-right, bottom-left neighbors, and/or any of the neighbors from collocated positions, and/or any with a scaling operation. In one embodiment, the lists of FRUC candidates can contain a subset or all unique motion vectors from:
- For entire blocks:
   ∘ The merge candidates as in HEVC,
   ∘ Unilateral motion vectors,
   ∘ *Top and left neighboring motion vectors if using the same reference frame,*
   ∘ *Top-left, top-right, bottom-left and other neighboring motion vectors if using the same reference frame,*
   ∘ *Current, top, left, top-left, top-right, bottom-left and other neighboring motion vectors from any collocated position,*
   ∘ *Scaled motion vectors of the top, left, top-left, top-right, bottom-left and other neighbors,*
   ∘ *Scaled motion vectors of the current, top, left, top-left, top-right, bottom-left and other collocated blocks.*
- For sub-blocks:
   ∘ The best refined FRUC candidate of the entire block (MV_{block}),
   ∘ A null motion vector candidate,
   ∘ Scaled motion vectors of the collocated and bottom-right collocated blocks associated with the sub-block,
   ∘ Scaled unilateral motion vectors,
   ∘ Top and left neighboring motion vectors if using the same reference frame.
   ∘ *Top-left, top-right, bottom-left and other neighboring motion vectors if using the same reference frame,*
   ∘ *Current, top, left, top-left, top-right, bottom-left and other neighboring motion vectors from any collocated position,*
   ∘ *Scaled motion vectors of the top, left, top-left, top-right, bottom-left and other neighbors,*
   ∘ *Scaled motion vectors of the current, top, left, top-left, top-right, bottom-left and other collocated blocks.*

In another embodiment, the lists of FRUC candidates can contain a subset of all of unique motion vectors from:
- For entire "AMVP" blocks:
   ∘ The merge candidates as in HEVC,
   ∘ Unilateral motion vectors,
   ∘ *"AMVP" motion vector candidates as in HEVC,*
   ∘ *Top and left neighboring motion vectors if using the same reference frame,*
   ∘ *Top-left, top-right, bottom-left and other neighboring motion vectors if using the same reference frame,*
   ∘ *Current, top, left, top-left, top-right, bottom-left and other neighboring motion vectors from any collocated position,*
   ∘ *Scaled motion vectors of the top, left, top-left, top-right, bottom-left and other neighbors,*
   ∘ *Scaled motion vectors of the current, top, left, top-left, top-right, bottom-left and other collocated blocks.*
- For entire "merge" blocks:
   ∘ The merge candidates as in HEVC,
   ∘ Unilateral motion vectors,
   ∘ *Top and left neighboring motion vectors if using the same reference frame,*
   ∘ *Top-left, top-right, bottom-left and other neighboring motion vectors if using the same reference frame,*
   ∘ *Current, top, left, top-left, top-right, bottom-left and other neighboring motion vectors from any collocated position,*
   ∘ *Scaled motion vectors of the top, left, top-left, top-right, bottom-left and other neighbors,*
   ∘ *Scaled motion vectors of the current, top, left, top-left, top-right, bottom-left and other collocated blocks.*

From the list of FRUC candidates a matching cost is calculated for each candidate, and the first encountered candidate with the lowest cost is defined as the best one (MVₛₜₐᵣₜ, or MV_{sub-start}), and selected for refinement. The order of the FRUC candidates within the lists thus may affect the choice of the FRUC candidate. In different embodiments, it is possible to modify the order of the FRUC list, for example, by moving the "AMVP" candidates to the first place before "merge" ones for "AMVP" blocks.

In another embodiment, FRUC can also be used to derive candidate motion vectors for Affine blocks that need three motion vectors. We may also add Affine AMVP candidates for an "AMVP" block, and Affine merge candidates for a "merge" block.

Adding more candidates to the initial FRUC lists can improve the results by deriving a better motion vector predictor than with the original lists. But as the number of candidates increases, the number of matching cost calculations also increases, impacting the complexity especially at the decoder side. However, having a more accurate FRUC candidate as a starting point for refinement may also reduce the computational complexity, since complexity of the FRUC tool is mostly due to the refinement that can be quite long depending on the number of performed steps.

TABLE 3 shows the results when the top, left and top-left neighbors are added to all FRUC lists in JEM 2.0. There is around 0.10% BD rate reduction with almost no increase in the encoding and decoding running time.

**TABLE 3**

| | **Random Access Main 10** | | | | |
|---|---|---|---|---|---|
| | **Over HM-16.6-JEM-2 (parallel)** | | | | |
| | Y | U | V | EncT | DecT |
| Class A1 | -0.06% | -0.08% | -0.18% | 103% | 106% |
| Class A2 | -0.22% | -0.23% | -0.19% | 101% | 90% |
| Class B | -0.05% | -0.02% | 0.12% | 101% | 97% |
| Class C | -0.07% | -0.09% | -0.11% | 101% | 109% |
| Class D | -0.06% | -0.12% | -0.29% | 101% | 105% |
| Class E | | | | | |
| **Overall (Ref)** | -0.09% | -0.10% | -0.12% | 101% | 101% |
| Class F (optional) | -0.04% | -0.04% | 0.08% | 101% | 81% |

TABLE 4 shows the results when the top, left, top-left, top-right and bottom-left neighbors are added to all FRUC lists in JEM 2.0. There is around 0.10% BD rate reduction with almost no increase in the encoding and decoding running time.

**TABLE 4**

| | **Random Access Main 10** | | | | |
|---|---|---|---|---|---|
| | **Over HM-16.6-JEM-2 (parallel)** | | | | |
| | Y | U | V | EncT | DecT |
| Class A1 | -0.05% | 0.10% | -0.12% | 102% | 106% |
| Class A2 | -0.28% | -0.33% | -0.18% | 100% | 90% |
| Class B | -0.04% | 0.04% | 0.03% | 100% | 98% |
| Class C | -0.07% | -0.03% | -0.19% | 100% | 110% |
| Class D | -0.09% | -0.04% | -0.12% | 100% | 106% |
| Class E | | | | | |
| **Overall (Ref)** | -0.10% | -0.05% | -0.11% | 100% | 101% |
| Class F (optional) | -0.06% | -0.02% | 0.10% | 100% | 82% |

TABLE 5 shows the results when the top, left, top-left, top-right and bottom-left neighbors are added to all FRUC lists, and when the AMVP candidates are added after original ones for "AMVP" blocks in JEM 2.0. There is around 0.20% BD rate reduction with about 2% decrease in the encoding and about 15% decrease in the decoding running time.

**TABLE 5**

| | **Random Access Main 10** | | | | |
|---|---|---|---|---|---|
| | **Over HM-16.6-JEM-2 (parallel)** | | | | |
| | Y | U | V | EncT | DecT |
| Class A1 | -0.23% | -0.28% | -0.47% | 103% | 92% |
| Class A2 | -0.39% | -0.43% | -0.40% | 99% | 76% |
| Class B | -0.15% | 0.00% | -0.02% | 97% | 79% |
| Class C | -0.16% | -0.14% | -0.21% | 95% | 91% |
| Class D | -0.12% | -0.26% | -0.16% | 95% | 88% |
| Class E | | | | | |
| **Overall (Ref)** | -0.21% | -0.21% | -0.24% | 98% | 85% |
| Class F (optional) | -0.12% | -0.11% | 0.01% | 95% | 67% |

TABLE 6 shows the results when the top, left, top-left, top-right and bottom-left neighbors are added to all FRUC lists, and when the AMVP candidates are added after original ones for "AMVP" blocks in JEM 2.0. There is around 0.25% BD rate reduction with almost no increase in the encoding time and about 10% decrease in the decoding running time.

**TABLE 6**

| | **Random Access Main 10** | | | | |
|---|---|---|---|---|---|
| | **Over HM-16.6-JEM-2 (parallel)** | | | | |
| | Y | U | V | EncT | DecT |
| Class A1 | -0.21% | -0.43% | -0.38% | 105% | 95% |
| Class A2 | -0.41% | -0.34% | -0.27% | 104% | 81% |
| Class B | -0.20% | -0.20% | -0.11% | 100% | 87% |
| Class C | -0.16% | -0.16% | -0.24% | 101% | 95% |
| Class D | -0.18% | -0.26% | -0.28% | 101% | 90% |
| Class E | | | | | |
| **Overall (Ref)** | -0.23% | -0.28% | -0.25% | 102% | 89% |
| Class F (optional) | -0.10% | -0.17% | -0.03% | 103% | 68% |

In the above embodiments, the matching cost of a FRUC candidate is calculated and the first encountered one with the lowest cost is selected as the best FRUC candidate for refinement. When several candidates have the same lowest cost or a cost close to the lowest one compared to others, we may refine these several candidates and select the best one from among the several candidates as the one with the lowest cost. It is also possible to first refine all candidates before selecting the best one as the one with the lowest matching cost.

Refining several or all candidates before selecting the best one can improve the results since the newly selected one can have a cost lower than the one selected by the original FRUC method. But refining more candidates may also increase the number of refinements and therefore impact the complexity.

TABLE 7 shows the results when the top, left, top-left, top-right and bottom-left neighbors are added to all FRUC lists, and when all FRUC candidates with the same lowest cost are refined before selecting the best FRUC candidate in JEM 2.0. There is around 0.10% BD rate reduction with about 2% increase in the encoding and decoding running time.

**TABLE 7**

| | **Random Access Main 10** | | | | |
|---|---|---|---|---|---|
| | **Over HM-16.6-JEM-2 (parallel)** | | | | |
| | Y | U | V | EncT | DecT |
| Class A1 | -0.05% | -0.13% | -0.18% | 103% | 107% |
| Class A2 | -0.14% | -0.28% | -0.15% | 101% | 91% |
| Class B | -0.02% | 0.08% | 0.14% | 101% | 98% |
| Class C | -0.05% | -0.05% | -0.06% | 101% | 111% |
| Class D | -0.09% | -0.19% | -0.27% | 101% | 107% |
| Class E | | | | | |
| **Overall (Ref)** | -0.07% | -0.10% | -0.09% | 102% | 102% |
| Class F (optional) | -0.05% | -0.03% | 0.03% | 101% | 83% |

Various embodiments are described with respect to the HEVC standard or the JEM software that is under development. However, the present principles are not limited to HEVC or JEM, and can be applied to other standards, recommendations, and extensions thereof. Various embodiments described above can be used individually or in combination. For example, the method of adapting the motion precision in the FRUC tool and the method of adjusting the motion vector candidates for FRUC can be used separately or in combination.

In the above discussions, the FRUC mode is first tested at an entire block that corresponds to a PB, and may then be applied to sub-blocks of the entire block for the merge mode.

In JEM 3.0, the QTBT (Quadtree plus Binary Tree) structure removes the concept of multiple partition types in HEVC, i.e., removes the separation of CU, PU and TU concepts. In QTBT block structure, CU can have either square or rectangle shape. A Coding Tree Unit (CTU) is firstly partitioned by a quadtree structure. The quadtree leaf nodes are further partitioned by a binary tree structure. The binary tree leaf node is named as Coding Units (CUs), which is used for prediction and transform without any further partitioning. That means the CU, PU and TU have the same block size in the new coding QTBT block structure. In JEM, a CU consists of Coding Blocks (CBs) of different color components.

Thus, for JEM 3.0, the FRUC mode can be first tested at an entire block that corresponds to a CB, and may then be applied to sub-blocks of the entire block for the merge mode. More generally, the entire block for the FRUC mode may be a CB, and sub-blocks associated with the entire block are sub-partitions for the entire block. The transform may performed at the CB level, and motion compensation may be performed at the sub-block level.

In JEM 3.0, there are several new temporal candidates in merge mode. These temporal candidates can be included into the list of FRUC candidates.

Template matching and bilateral matching are used above to describe the method of motion vector derivation, where motion information of a block is not signaled but derived at decoder side for the merge mode, and where the MVP information of a block is not signaled but derived at decoder side for the AMVP mode. In various embodiments, the templates used for template matching and bilateral matching can be different from what is shown before, and other motion derivation methods can also be used.

In some embodiments, different methods are used for an "AMVP" block and a "merge" block based on HEVC. More generally, an "AMVP" block can be considered as a block that encodes or decodes an MVD associated with a MVP (i.e., a "with MVD" block), and a "merge" block can be considered as a block that encodes or decodes the motion information without an MVD (i.e., a "without MVD" block). For example, a "with MVD" block may refine the precision of a derived motion vector to the MVD precision as shown in method 1100, while a "without MVD" block may refine the precision of a derived motion vector to the internal precision as shown in method 1000.

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the number of iterations of refinement, the size of a minimum sub-block, or the constant M used in motion cost calculation. It should be noted that the specific values are for exemplary purposes and the present principles are not limited to these specific values.

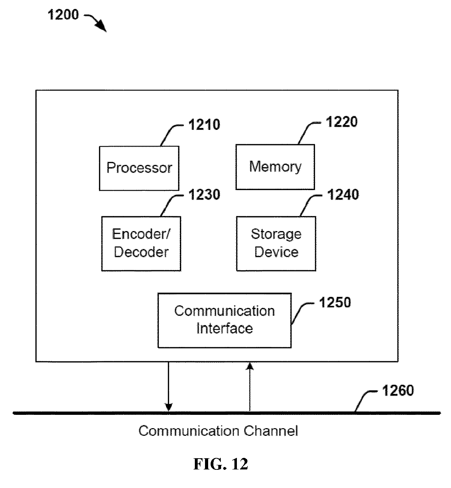

FIG. 12 illustrates a block diagram of an exemplary system in which various aspects of the exemplary embodiments of the present principles may be implemented. System 1200 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1200 may be communicatively coupled to other similar systems, and to a display via a communication channel as shown in FIG. 12 and as known by those skilled in the art to implement the exemplary video system described above.

The system 1200 may include at least one processor 1210 configured to execute instructions loaded therein for implementing the various processes as discussed above. Processor 1210 may include embedded memory, input output interface and various other circuitries as known in the art. The system 1200 may also include at least one memory 1220 (e.g., a volatile memory device, a non-volatile memory device). System 1200 may additionally include a storage device 1240, which may include non-volatile memory, including, but not limited to, EEPROM, ROM, PROM, RAM, DRAM, SRAM, flash, magnetic disk drive, and/or optical disk drive. The storage device 1240 may comprise an internal storage device, an attached storage device and/or a network accessible storage device, as non-limiting examples. System 1200 may also include an encoder/decoder module 1230 configured to process data to provide an encoded video or decoded video.

Encoder/decoder module 1230 represents the module(s) that may be included in a device to perform the encoding and/or decoding functions. As is known, a device may include one or both of the encoding and decoding modules. Additionally, encoder/decoder module 1230 may be implemented as a separate element of system 1200 or may be incorporated within processors 1210 as a combination of hardware and software as known to those skilled in the art.

Program code to be loaded onto processors 1210 to perform the various processes described hereinabove may be stored in storage device 1240 and subsequently loaded onto memory 1220 for execution by processors 1210. In accordance with the exemplary embodiments of the present principles, one or more of the processor(s) 1210, memory 1220, storage device 1240 and encoder/decoder module 1230 may store one or more of the various items during the performance of the processes discussed herein above, including, but not limited to the input video, the decode video, the bitstream, equations, formula, matrices, variables, operations, and operational logic.

The system 1200 may also include communication interface 1250 that enables communication with other devices via communication channel 1260. The communication interface 1250 may include, but is not limited to a transceiver configured to transmit and receive data from communication channel 1260. The communication interface may include, but is not limited to, a modem or network card and the communication channel may be implemented within a wired and/or wireless medium. The various components of system 1200 may be connected or communicatively coupled together using various suitable connections, including, but not limited to internal buses, wires, and printed circuit boards.

The exemplary embodiments according to the present principles may be carried out by computer software implemented by the processor 1210 or by hardware, or by a combination of hardware and software. As a non-limiting example, the exemplary embodiments according to the present principles may be implemented by one or more integrated circuits. The memory 1220 may be of any type appropriate to the technical environment and may be implemented using any appropriate data storage technology, such as optical memory devices, magnetic memory devices, semiconductor-based memory devices, fixed memory and removable memory, as non-limiting examples. The processor 1210 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for video decoding, comprising:
determining (1030) a first motion vector predictor for a first block in a picture, without explicit syntax information related to the first motion vector predictor, wherein the first motion vector predictor is at a first precision, the first precision being finer than a second precision of signaling a motion vector difference and the first precision being finer than 1/8-pel;
determining a first motion vector for the first block based on the first motion vector predictor for the first block; and
decoding the first block based on the determined first motion vector for the first block.

2. A method for video encoding, comprising:
determining (1030) a first motion vector predictor at a first precision for a first block in a picture, the first precision being finer than a second precision of signaling a motion vector difference and the first precision being finer than 1/8-pel, wherein there is no explicit syntax used to signal the first motion vector predictor;
determining a first motion vector for the first block based on the first motion vector predictor for the first block; and
encoding the first block based on the determined first motion vector for the first block.

3. An apparatus for video decoding, comprising:
means for determining a first motion vector predictor for a first block in a picture, without explicit syntax information related to the first motion vector predictor, wherein the first motion vector predictor is at a first precision, the first precision being finer than a second precision of signaling a motion vector difference and the first precision being finer than 1/8-pel;
means for determining a first motion vector for the first block based on the first motion vector predictor for the first block; and
means for decoding the first block based on the determined first motion vector for the first block.

4. An apparatus for video encoding, comprising:
means for determining a first motion vector predictor at a first precision for a first block in a picture, the first precision being finer than a second precision of signaling a motion vector difference and the first precision being finer than 1/8-pel, wherein there is no explicit syntax used to signal the first motion vector predictor;
means for determining a first motion vector for the first block based on the first motion vector predictor for the first block; and
means for encoding the first block based on the determined first motion vector for the first block.

5. The method of claim 1 or 2 further comprising; or the apparatus of claim 3 or 4 further comprising means for:
determining a second motion vector predictor for a second block in the picture, without explicit syntax information related to the second motion vector predictor, wherein the second motion vector predictor is determined at the second precision, and wherein an encoding mode of the second block differs from an encoding mode of the first block.

6. The method of claim 5, or the apparatus of claim 5, wherein the first motion vector for the first block is determined as the first motion vector predictor for the first block.

7. The method of claim 5 or 6, or the apparatus of claim 5 or 6, wherein the second motion vector for the second block is based on the second motion vector predictor and a second motion vector difference.

8. The method of any one of claims 5-7, or the apparatus of any one of claims 5-7 wherein the first block is in a merge mode, and the second block is in an AMVP mode.

9. The method of any one of claims 1-2 or 5-8, or the apparatus of any one of claims 3-8, wherein the first precision is an internal precision at a decoder or at an encoder.

10. The method of claim 9, or the apparatus of claim 9, wherein the determining the first motion vector predictor at the first precision is only performed when the internal precision is finer than half of the second precision.

11. The method of claim 9 or 10, or the apparatus of claim 9 or 10, wherein the first precision is between an internal precision and the second precision.

12. The method of any one of claims 1-2 or 5-11, or the apparatus of any one of claims 3-11, wherein the determining the first motion vector predictor for the first block comprises:
selecting an initial motion vector for the first block from a plurality of motion vector candidates at the second precision; and
refining the initial motion vector to the first precision.

13. The method of any one of claims 1-2 or 5-12, or the apparatus of any one of claims 3- 12, wherein the first block corresponds to a prediction block or a coding block.

14. A bitstream formatted to include:
encoding data representative of a block of a picture, wherein a motion vector predictor for the block is at a first precision, the first precision being finer than a second precision of signaling a motion vector difference and the first precision being finer than 1/8-pel,
wherein there is no explicit syntax used to signal the motion vector predictor,
wherein a motion vector for the block is based on the motion vector predictor for the block, and
wherein the block is encoded based on the motion vector for the block.

15. A computer program comprising software code instructions for performing the method according to any one of claims 1-2 or 5-13 when the computer program is executed by one or more processors.
